# EUROPÄISCHE PATENTSCHRIFT

(11) **EP 0 929 752 B1**
(45) Veröffentlichungstag und Bekanntmachung des Hinweises auf die Patenterteilung: **08.05.2002**
(21) Anmeldenummer: 96934575.0
(22) Anmeldetag: 08.10.1996
(51) Int. Cl.: F16D 48/06, F16D 43/286, F16D 1/08

(54) **ANTRIEBSSYSTEM ZUR LEISTUNGSÜBERTRAGUNG VON EINER ABTRIEBSQUELLE AUF MEHRERE ABTRIEBSSTRÄNGE**
DRIVE SYSTEM FOR THE TRANSMISSION OF POWER FROM A DRIVE SOURCE TO A PLURALITY OF OUTPUT TRAINS
SYSTEME D'ENTRAINEMENT POUR LA TRANSMISSION DE PUISSANCE A PLUSIEURS LIGNES DE SORTIE A PARTIR D'UNE SOURCE D'ENTRAINEMENT

(43) Veröffentlichungstag der Anmeldung: 21.07.1999
(73) Patentinhaber: Voith Turbo GmbH & Co. KG, 89522 Heidenheim (DE)
(72) Erfinder: LINDENTHAL, Hans, D-89522 Heidenheim (DE)
(74) Vertreter: Dr. Weitzel & Partner
(86) Internationale Anmeldenummer: EP9604361
(87) Internationale Veröffentlichungsnummer: WO9815750

(56) Entgegenhaltungen:
- DE-A- 4 028 158
- DE-A- 4 112 484
- US-A- 3 686 919
- US-A- 4 635 769
- US-A- 4 662 492

## Beschreibung

Die Erfindung betrifft Antriebssystem zur Leistungsübertragung von einer Antriebsquelle auf mehrere Abtriebsstränge, im einzelnen mit den Merkmalen des Oberbegriffes von Anspruch 1.

Viele industriell genutzte Antriebskonzepte basieren auf der Aufteilung und Übertragung der von einer Antriebsquelle aufgebrachten Leistung auf mehrere abtriebseitige Abnehmer. Als ein wesentliches Einsatzgebiet eines derartigen Antriebskonzeptes können Walzwerke angesehen werden. Die von einem Motor aufgebrachte Leistung wird über Wellenstränge auf mehrere Arbeitswalzen übertragen. Den Wellensträngen ist zu diesem Zweck ein Verteilergetriebe in Leistungsübertragungsrichtung vorgeschaltet. Das Verteilergetriebe besteht im einfachsten Fall nur aus mehreren Stirnradstufen, die derart angeordnet sind, daß entsprechend der Übersetzung zwischen den Stirnradstufen die Leistung in bestimmten Verhältnissen auf die nachgeordneten Gelenkwellenstränge übertragen wird. Im Antriebsstrang können des weiteren weitere Vorrichtungen zur Drehmoment-Drehzahlwandlung vorgesehen sein. Störungen auf der anzutreibenden Maschinenseite, bei denen eine Drehmomentübertragung vom Antrieb zum Abtrieb nicht mehr gegeben ist, haben eine unzulässige Drehmomentensteigerung im Antriebsstrang zur Folge. Bei Walzwerken äußern sich derartige Störungen vor allen Dingen als Blockiervorgänge im Walzprozeß. Die Ursachen derartiger Blockiervorgänge liegen vor allem in einer Doppelung des Walzgutes, der Verwendung kalten Walzgutes, dem Walzenbruch bzw. dem Walzenausbruch. Als Grund für eine derartig unzulässige Drehmomentensteigerung ist zu sehen, daß die Massen bei weiterem Betrieb der Antriebsquelle trotz der Störung auf der Abtriebsseite weiterdrehen, wobei dem abtriebsseitig die Trägheit der blockierten Elemente entgegenwirkt. Dies äußert sich in einer Verformung im Antriebsstrang -Torsion, die im Extremfall bis zum Torsionsbruch führen kann. Zu dessen Vermeidung sowie generell zur Verhinderung unzulässiger Drehmomentensteigerungen sind spezielle schnell lösbare Sicherheitskupplungen zur Übertragung von Drehmomenten zwischen zwei gleichachsigen Maschinenteilen bekannt. Eine derartige Kupplung mit Überlastsicherungseinrichtung gegen Drehmomentenüberlastung ist beispielsweise in der DE-OS 29 23 902 offenbart. Diese weist mindestens eine dünnwandige Hülse auf, die eine sich axial erstreckende Wand einer im wesentlichen ringförmigen Kammer bildet, die mit Druckmittel beaufschlagbar ist, um diese Hülse im wesentlichen elastisch in radialer Richtung zu deformieren und mit einer Fläche eines Elementes, an dem die Kupplung befestigt werden soll, zu verklemmen. An die ringförmige Kammer schließt sich eine Kanalanordnung an, der eine Sicherheits- bzw. Kupplungsentlastungsanordnung zugeordnet ist, die durch Relativbewegung zwischen diesen beiden Flächen oder eine bestimmte Torsionsdeformation derselben in einen Zustand gebracht werden kann, bei dem das in der ringförmigen Kammer befindliche Druckmittel zur Entlastung der ringförmigen Kammer aus dieser durch die Kanalanordnung ausströmen kann.

Zum Übertragen eines bestimmten Drehmomentes ist eine bestimmte Flächenpressung erforderlich. Dazu wird Öl in die ringförmige Kammer gepumpt, bis der notwendige Druck erreicht ist, der zum Verspannen der einzelnen Maschinenteile gegeneinander erforderlich ist. Die Kupplung wird somit auf das gewünschte Auslösedrehmoment eingestellt. Bei Überschreitung dieses Drehmomentes im Falle einer Überlastung rutscht die Kupplung durch. Das übertragbare Drehmoment fällt ab, denn der wirksame Haftreibungskoeffizient geht in den Gleitreibungskoeffizienten über. Es findet in Umfangsrichtung eine Relativbewegung zwischen den einzelnen miteinander verklemmten Elementen der beiden Maschinenteile statt. Ein beispielsweise auf dem einen Maschinenteil befestigter Abscherring schert ein mit der Kanalanordnung bzw. der ringförmigen Kammer der Kupplung in Verbindung stehendes Abscherventil ab. Nach dem Abscheren des Abscherventiles bzw. der Abscherventile kann das unter hohem Druck stehende Öl frei expandieren, und das übertragbare Drehmoment fällt innerhalb weniger Millisekunden bis auf Null ab. Derartige Kupplungen sind sinnvollerweise im Bereich möglicher Störstellen angeordnet. Für den Einsatz in Walzwerken bedeutet dies, daß die Sicherheitskupplung in der Nähe der Walzen angeordnet sein muß. Dies ist jedoch nicht realisierbar, weshalb entweder in jedem Gelenkwellenstrang oder unmittelbar vor jedem Gelenkwellenstrang eine derartige Sicherheitskupplung vorgesehen ist. Der Nachteil einer derartigen Anordnung von Sicherheitskupplungen in einem Antriebsstrang speziell für den Einsatzfall in einem Walzwerk besteht vor allem in einer hohen Kostenintensität, da jedem Gelenkwellenstrang bzw. jedem Abtriebszweig eine Sicherheitskupplung zugeordnet ist. Des weiteren besteht ein enger Zusammenhang zwischen der Größe der Sicherheitskupplung und des übertragbaren Drehmomentes. Dieser hat wiederum Einfluß auf die Größe der Sicherheitskupplungen in radialer Richtung, die jedoch durch die Anordnung der Gelenkwellensträngen bzw. der einzelnen Abtriebe sowie deren Achsabstände zueinander begrenzt ist.

Der Erfindung liegt deshalb die Aufgabe zugrunde, ein Antriebssystem der eingangs genannten Art derart weiterzuentwickeln, daß die genannten Nachteile vermieden werden. Das Ziel besteht in der Schaffung einer kostengünstigen, mit wenig Aufwand realisierbaren, sicheren sowie schnell reagierenden Überlastsicherung gegenüber Drehmomentenüberlastung. Die Überlastsicherung gegenüber Drehmomentenüberlastung soll bereits bei Drehmomenten, die das maximal zulässige Drehmoment nur geringfügig überschreiten, wirksam werden können. Sinnvoll ist es weiterhin, die Größe des maximal zulässigen übertragbaren Drehmomentes einstellen bzw. direkt festlegen zu können, so daß bei dessen Überschreitung die Drehmomentenübertragung sofort unterbrochen werden kann. Die Überlastsicherung gegenüber Drehmomentenüberlastung soll sich des weiteren durch eine geringe Ansprechzeit, d.h. eine geringe Zeitspanne zwischen dem Auftreten eines unzulässig hohen Drehmomentes und der Unterbrechung der Drehmomentenübertragung auszeichnen.

Die konstruktive Umsetzung soll derart erfolgen, daß eine kostengünstige Realisierung von Aufbau und Funktion des Überlastsicherungsmechanismus mit einer geringen Anzahl einfach gestalteter Bauteile erfolgt. Die gesamte Anordnung soll sich durch einen geringen Fertigungs- und Montageaufwand sowie ein einfaches und schnelles Wiedereinrichten nach dem Auflösefall, d.h. nach der Unterbrechung der Drehmomentenübertragung auszeichnen.

Die erfindungsgemäße Lösung der Aufgabe ist durch die Merkmale des Anspruches 1 charakterisiert.
Vorteilhafte Ausgestaltungsmöglichkeiten bzw. Ausführungen sind in den Unteransprüchen wiedergegeben.

Durch die erfindungsgemäße Anordnung einer Sicherheitskupplung, umfassend einen Kupplungsgrundkörper zur reibschlüssigen Verbindung zweier Maschinenteile und einen Entlastungsmechanismus, vor dem Verteilergetriebe ist nur noch eine einzige Kupplung zur Absicherung gegenüber Drehmomentenüberlastung erforderlich. Zur Lösung der Aufgabe kann der Entlastungsmechanismus jedoch nicht wie in der in der DE-OS 29 23 902 beschriebenen Ausführung aufgebaut sein und wirksam werden, sondern es ist ein entsprechender Entlastungsmechanismus vorzusehen, der sich durch eine geringe Ansprechzeit auszeichnet. Die Ansprechzeit sollte dabei nur einem Bruchteil der Eigenfrequenz des Antriebssystems entsprechen, so daß bereits Verformungen im Antriebsstrang vermieden werden. Dies wird durch Fremdauslösung, d.h. durch gesteuerte mittelbare oder unmittelbare Auslösung bzw. Freigabe der Zufuhrleitungen erreicht. Zur Unterbrechung der Drehmomentenübertragung bereits bei geringen Drehmomentspitzen an den einzelnen Abtrieben, speziell Gelenkwellensträngen, ist ein entsprechender Entlastungsmechanismus vorgesehen, der mit einer, jedem Abtriebsstrang, insbesondere jedem Gelenkwellenstrang zugeordneten Drehmomentenmeßeinrichtung und/oder einer Einrichtung zur Erfassung einer dem zu erwartenden Drehmoment proportionalen Größe und/oder einer Einrichtung zur Erfassung einer in der Umgebung der Maschine ermittelbaren und sich auf die Arbeitsweise der Maschine auswirkenden Störgröße, gekoppelt ist.

Die Sicherheitskupplung ist eine fremdausgelöste Kupplung, welche entsprechend einem ermittelten Wert für das aktuelle übertragene Drehmoment und/oder einem dem Drehmoment proportionalen Kennwert und/oder dem Auftreten einer Störgröße auslösbar sind. Für die Auslösung können eine Vielzahl von Möglichkeiten in Betracht gezogen werden:
1) Meßung bzw. Ermittlung des Drehmomentes an jedem Abtriebsstrang, insbesondere jedem Gelenkwellenstrang und/oder
2) Meßung bzw. Ermittlung einer dem Drehmoment an den einzelnen Abtriebssträngen proportionalen Größe (beispielsweise in einem Walzwerk die Walzkraft, Geschwindigkeitsdifferenzen) und/oder
3) Meßung bzw. Ermittlung von Parametern des zu be- oder verarbeitenden Materials beispielsweise beim Einsatz in Walzwerken als indirekte, dem Drehmoment proportionale Größe (Temperatur, Dicke) und/oder
4) Erfassung einer den Arbeitsablauf der Maschine im nachhinein beeinflussenden Störgröße (beispielsweise Schwingungen im Fundament bei Erdbeben).

Die ermittelten Werte können mit einem nicht zu überschreitenden Sollwert, welcher vorgebbar sein kann, verglichen werden und beispielsweise in einer Steuerung ein Signal zur Ansteuerung der Entlastungseinrichtung erzeugen. Eine mechanische Übermittlung ist ebenfalls denkbar.

Für die Gestaltung und Auslösemöglichkeiten des Entlastungsmechanismus sind eine Vielzahl von Varianten denkbar. Der Entlastungsmechanismus umfaßt beispielsweise eine Abschereinrichtung zum Abtrennen der die ringförmige Kammer der Kupplung gegen den Austritt von Druckflüssigkeit verschließenden Abscherventile. Dieser ist frei drehbar gegenüber dem Kupplungsgrundkörper, der wenigstens eine dünnwandige Hülse, die eine Wand der mit Druckmittel beaufschlagbaren ringförmigen Kammer bildet, zur reibschlüssigen Verbindung zweier Maschinenteile gelagert. Die Lagerung erfolgt derart, daß die Abschereinrichtung im Betrieb des Antriebsstranges nahezu ohne Geschwindigkeits - bzw. Drehzahldifferenz gegenüber den Abscherventilen mitgenommen wird. Die Kopplung zwischen dem Entlastungsmechanismus und den Drehzahlmeßeinrichtungen eines jeden Gelenkwellenstranges erfolgt derart, daß bei Überschreitung eines maximal zulässigen Drehmomentes und/oder eines dem max. zulässigen Drehmoment proportionalen Kennwertes oder dem Auftreten einer Störgröße die Abschereinrichtung abgebremst wird. Durch die dabei entstehende Drehzahl- bzw. Geschwindigkeitsdifferenz erfolgt ein Abscheren der Abscherventile aufgrund der Relativbewegung zwischen Abschereinrichtung und Abscherventilen in Umfangsrichtung und damit eine Entspannung des Druckmittels im ringförmigen Raum. Die Kraft- bzw. Drehmomentenübertragung wird dadurch unterbrochen.

Eine weitere Möglichkeit besteht darin, daß der Entlastungsmechanismus wenigstens ein, ein Sprengmittel tragendes Bauelement umfaßt, welches im Überlastfall zur Sprengung gebracht und wenigstens mittelbar ein Freigeben der Zufuhrleitungen ermöglicht. Bei den Sprengmitteln handelt es sich um feste, flüssige oder auch pastenartige Substanzen oder Substanzgemische, die nach Zündung durch Funken, Flammen, Reibung, Schlag e.tc. rasch große Mengen komprimierbarer Gase freisetzen, welche zerstörerisch wenigstens auf ihre unmittelbare Umgebung wirken. Für die Auslösung der Kupplung und der Entlastung und damit die Unterbringung des Sprengmittels sind wenigstens zwei Möglichkeiten denkbar:
1) die Auslösung erfolgt direkt, d.h. das Sprengmittel wird unmittelbar in den Verschlußventilen integriert und dort zur Sprengung gebracht;
2) die Auslösung durch das das Sprengmittel tragende Baauelement erfolgt indirekt, d.h. der Entlastungsmechanismus umfaßt eine Abschereinrichtung wobei das Sprengmittel in Verbindungselementen o.ä. eingesetzt wird und gegenüber bzw. an der Abschereinrichtung wirksam wird.

Das erfindungsgemäße Grundprinzip der Anordnung einer Sicherheitskupplung gegenüber Drehmomentenüberlastung und die erfindungsgemäße Ausführung des entsprechenden, zur Sicherheitskupplung gehörigen Entlastungsmechanismus führen zu einer kostengünstigen, mit wenig Aufwand realisierbaren Drehmomentenüberlastsicherungseinrichtung in einem Antriebsstrang, bei dem die von einer Antriebsquelle aufgebrachte Leistung auf mehrere Abnehmer auf der Abtriebsseite verteilt wird.

Die Abschereinrichtung ist vorzugsweise als Ring ausgeführt, der Aussparungen, die die Abscherventile, die in der Regel über den Kupplungsgrundkörper in radialer Richtung hinausragen, wenigstens zum Teil umschließen. Abschereinrichtungen, insbesondere Abscherring und Grundkörper der Kupplung sind vorzugsweise beide auf dem gleichen Element bzw. dem gleichen Maschinenteil gelagert.

Die Abbremsung bzw. Arretierung der Abschereinrichtung kann verschiedenartig ausgeführt sein. Denkbar sind der Einsatz einer Scheibenbremse, einer Backenbremse, eines Klinkenmechanismus oder der Einsatz von Systemen mit Federvorspannung, die durch elektromagntische Kräfte entriegelt werden. Aufwandmäßig am einfachsten gestaltet sich der Einsatz einer Scheiben- oder auch Backenbremse. Die Abschereinrichtung bzw. der Abscherring ist für diesen Fall in radialer Richtung verlängert und weist in dieser Richtung eine Angriffsfläche für die Bremsscheiben auf. Vorzugsweise wird die Verlängerung in radialer Richtung so groß wie möglich gewählt, um möglichst große Angriffsflächen für die Scheiben der Bremse zu realisieren, damit möglichst kleine Abbremskräfte, d.h. Andrückkräfte der Scheiben aufgebracht werden müssen.

Bei der Verwendung eines Klinkenmechanismus zur Abbremsung der Abschereinrichtung bzw. des Abscherringes weist diese auf der den Abscherventilen in axialer Richtung abgewandten Seite oder auch an einer Fläche in radialer Richtung eine Verzahnung auf. Diese Verzahnung, bildet das Raster für den Eingriff einer Klinke oder eines Sperrbolzens. Der Sperrbolzen oder die Klinke werden im Normalbetrieb beispielsweise durch Federn in einer fest definierten Lage gegenüber dem Maschinengestell gehalten. Bei Überschreitung des maximal zulässigen Drehmomentes an einem der Gelenkwellenstränge wird beispielsweise ein Magnet zur Entriegelung der Klinke bzw. des Sperrbolzens und damit zur Bewegung der Klinke bzw. des Sperrbolzens in Richtung des Rasters bis zum Einrasten aktiviert. Für die Ansprechzeit, d.h. für die Zeitspanne zwischen der Messung des unzulässig hohen Drehmomentes und der Abscherung der Abscherventile, ist die Anzahl der Raster bzw. die Schnelligkeit der Bewegung der Klinke bzw. der Sperrbolzen in die Raster entscheidend. Durch entsprechende konstruktive Maßnahmen kann diese Zeit optimiert werden.

Zur Drehmomentenmessung bzw. zur Ermittlung einer dem Drehmoment proportionalen Größe, welche dieses unmittelbar oder mittelbar beeinflußt, an den Gelenkwellensträngen bzw. auch an den Walzen oder der Ermittlung einer Störgröße können verschiedene Meß- bzw. Erfassungssysteme genutzt werden. Die Drehmomentenmessung und/oder die Erfassung einer dem Drehmoment proportionalen Größe und/oder einer Störgröße kann mechanisch, elektrisch oder auch optisch erfolgen. Die für den jeweiligen Einsatzfall günstigste Variante ist im einzelnen für den konkreten Einsatzfall zu prüfen. Mechanische MeB- und Erfassungssysteme beruhen auf dem Prinzip der Dehnmeßstreifen oder des mechanischen Drehmomentenaufnehmers. Aber auch Kombinationen aus den einzelnen Meßsystemen sind denkbar.

Die Kopplung der Einrichtung zur Drehmomentenmessung und/oder einer dem Drehmoment proportionalen Größe und/oder einer Störgröße mit dem Entlastungssystem erfolgt vorzugsweise elektronisch. Eine mechanische Kopplung ist denkbar, setzt jedoch eine hohe Bearbeitungsgenauigkeit voraus, da der Abstand zwischen Meß- bzw. Erfassungsstelle und Abschereinrichtung in der Regel sehr groß ist. Beispielsweise wird die Kopplung zwischen Meß- bzw. Erfassungseinrichtung und Entlastungseinrichtung mittels einer Steuerung realisiert, deren Eingangsgröße beispielsweise ein Signal "Drehmoment überschritten" und deren Ausgangsgröße ein Signal zum Abbremsen der Abschereinrichtung oder zum Zünden des Sprengmittels sind.

Durch die erfindungsgemäße Anordnung der Sicherheitskupplung vor dem Verteilergetriebe genügt eine einzige Sicherheitskupplung in einem derartigen Antriebsstrang zur Absicherung gegenüber Drehmomentenüberlastung. Die Auslegung des Kupplungsgrundkörpers, d.h. zur Realisierung der reibschlüssigen Verbindung zwischen zwei Maschinenteilen, erfolgt entsprechend des zu übertragenden Drehmomentes vor dem Verteilergetriebe. Die Abschereinrichtung wird extern, d.h. nicht durch unmittelbar durch Verformungen im Antriebsstrang bei Überschreitung des höchstzulässigen Drehmomentes und/oder einer dem Drehmoment proportionalen Größe an einem der Abtriebsstränge aktiviert. Dadurch kann eine sehr kostengünstige Überlastsicherung gegenüber Drehmomentenüberlastung in einem derartigen Antriebsstrang realisiert werden. Die Ausführung des Entlastungsmechanismus erfolgt derart, daß möglichst kurze Ansprechzeiten, d.h. möglichst kurze Zeitspanne zwischen dem Auftreten von Drehmomentspitzen und der Unterbrechung des Drehmomentenflusses vor dem Verteilergetriebe, erreicht werden. Die Drehmomentenkapazität der Sicherheitskupplung wird nicht mehr durch die Abstände der einzelnen Abtriebs stränge begrenzt.

Vorzugsweise werden die Aussparungen der Abschereinrichtungen, insbesondere der Abscherringe, die die Abscherventile umschließen, mit unterschiedlichen Schlitzlängenbreiten versehen. Dies bedeutet, daß beim Abbremsen bzw. beim Arretieren des Abscherringes ein Abscheren der einzelnen Abscherventile nacheinander erfolgt. Dies hat den besonderen Vorteil, daß zum Abscheren der Abscherventile nur sehr geringe Kräfte aufgebracht werden müssen. Das Abscheren der Abscherventile erfolgt nacheinander, d.h. nach Abscherung eines Ventiles erfolgt das Abscheren des nächsten Ventiles, was zu einer deutlichen Verbesserung der Laufruhe im Antriebssystem beiträgt. Bei einer gleichzeitigen Abscherung aller Abscherventile sind sehr hohe Kräfte erforderlich, die zu unerwünschten Schwingungen im Antriebssystem führen würden. Die Anzahl der Abscherventile, die an einem Kupplungsgrundkörper vorgesehen werden, und die Anzahl der Aussparungen in der Abschereinrichtung stimmen vorzugsweise überein. Es besteht jedoch auch die Möglichkeit, einen Abscherring mit einer bestimmten Anzahl von Aussparungen derart vorzusehen, daß dieser an verschiedene Kupplungsgrundkörper angepaßt werden kann, wodurch die Möglichkeit der Schaffung eines Baukastensystems in Erwägung gezogen werden kann.

Vorzugsweise sind alle Schaltelemente, d.h. alle Elemente, die zur Unterbrechung des Drehmomentenflusses in irgendeiner Weise bewegt werden müssen, mit einer sehr kleinen Masse ausgestattet, um deren Trägheit bei Aktivierung des Entlastungsmechanismus möglichst schnell zu überwinden.

Eine bevorzugte Ausführung einer Sicherheitskupplung besteht entsprechend Anspruch 17 darin, zur Aktivierung der Abschereinrichtung wenigstens ein, ein Sprengmittel tragendes Bauelement, beispielsweise einen Sprengbolzen, welcher zur Explosion gebracht wird, zu verwenden.
Dabei finden konventionelle Abschermechanismen Anwendung - beispielsweise in Form eines Abscherringes - welche in ihrer Lage gegenüber dem Kupplungsgrundkörper im Normalbetrieb fixiert sind und im Auslösefall in radialer oder in axialer Richtung relativ zu diesen verschoben werden können. Das Vorsehen zusätzlicher Mittel zur Beschleunigung der Relativbewegung ist denkbar, beispielsweise durch vorgespannte Federn.
Vorzugsweise sind wenigstens zwei Sprengbolzen in gleichem Abstand um den Umfang der Antriebswelle angeordnet. Die Abschereinrichtung selbst kann beispielsweise drehfest mit der Antriebswelle verbunden sein, jedoch in axialer Richtung verschiebbar auf dieser gelagert. Eine Möglichkeit für eine derartige Anordnung ist eine Keilwellenverbindung zwischen Antriebswelle und Abschereinrichtung. Die Abschereinrichtung kann des weiteren auch frei drehbar auf der Antriebswelle gelagert sein. Eine drehfeste Verbindung ist nicht unbedingt erforderlich, bietet sich jedoch im Fall der Verwendung einer Abschereinrichtung in Form eines Abscherringes an, da der Ring mit entsprechenden Aussparungen zur Aufnahme der Verschlußelemente, welche meist in Form von Ventilen gestaltet sind, ausgeführt werden kann.

Die Sprengbolzen sind mit einer Zündeinrichtung gekoppelt, welche entsprechend einem Signal der Meß- bzw. Erfassungseinrichtung aktiviert wird. Die Meß- bzw. Erfassungseinrichtung ist vorzugsweise in Form einer Steuereinrichtung ausgeführt, welche wenigstens einen Istwerteingang und einen Ausgang aufweist. Die beiden Eingänge sind jeweils mit einer Meß- bzw. Erfassungseinrichtung zur Ermittlung des aktuellen Drehmomentes und/oder einer dem Drehmoment direkt oder indirekt proportionalen Größen und/oder einer Störgröße gekoppelt. Das Istwertsignal wird mit einem entweder fest vorgegebenen oder einstellbaren zulässigen Wert im Steuergerät verglichen. Entsprechend der Abweichung, d.h. bei Überschreitung wird am Ausgang des Steuergerätes ein Signal zum Auslösen des Entlastungsmechanismus, in diesem Fall zur Zündung der Sprengbolzen, ausgegeben. Da die Übertragung und der Vergleich bei elektronischer Messung mit Lichtgeschwindigkeit erfolgt, und analog dazu auch die Auslösung des Entlastungsmechanismus mit dieser Geschwindigkeit möglich ist, eignet sich eine derartig gestaltete Sicherheitskupplung besonders zum raschen Auslösen bei Drehmomentenüberlastung oder beieinem möglichen Störfall. Der Entlastungsmechanismus kann sofort bei Ermittlung einer auftretenden Drehmomentenspitze oder bereits vorher ausgelöst werden, was bei mechanischen Meßeinrichtungen immer zu einer gewissen geringen Verzögerung führen kann.

Eine weitere Möglichkeit besteht darin, die Abschereinrichtung mittels vorgespannter, beispielsweise mit Federn, Trennschrauben, welche ebenfalls gezündet werden, im Normalbetrieb in ihrer Lage zu fixieren und bei Auslösung, d.h. beim Auftreten des Überlastungsfalles in Richtung der Verschlußelemente zu beschleunigen. Die Abschereinrichtung kann derart ausgeführt sein, daß diese in radialer Richtung oder aber axial an den Verschlußelementen angreift. Durch die Vorspannung kann der Auslösevorgang zusätzlich noch beschleunigt werden.

Die erfindungsgemäße Lösung wird nachfolgend anhand von Figuren erläutert. Es zeigen:
- Figur 1: die erfindungsgemäße Anordnung einer Sicherheitskupplung in einem Antriebssystem am Beispiel eines Walzwerkes;
- Figur 2a und 2b: eine erfindungsgemäße Ausführung eines Entlastungsmechanismus am Beispiel eines mit Bremsschreiben abgebremsten Abscherringes;
- Figur 3a und 3b: die erfindungsgemäße Ausführung eines Entlastungsmechanismus in Form eines Klinkenmechanismus;
- Figur 4: eine bevorzugte Ausführung eines Abscherringes in einer Ansicht II-II aus Figur 2a;
- Figur 5: eine erfindungsgemäße Ausführung eines Entlastungsmechanismus mit einem ein Sprengmittel tragenden Element, beispielsweise einen Sprengbolzen;
- Figur 6: eine erfindungsgemäße Ausführung eines Entlastungsmechanismus mit vorgespannter Abschereinrichtung.

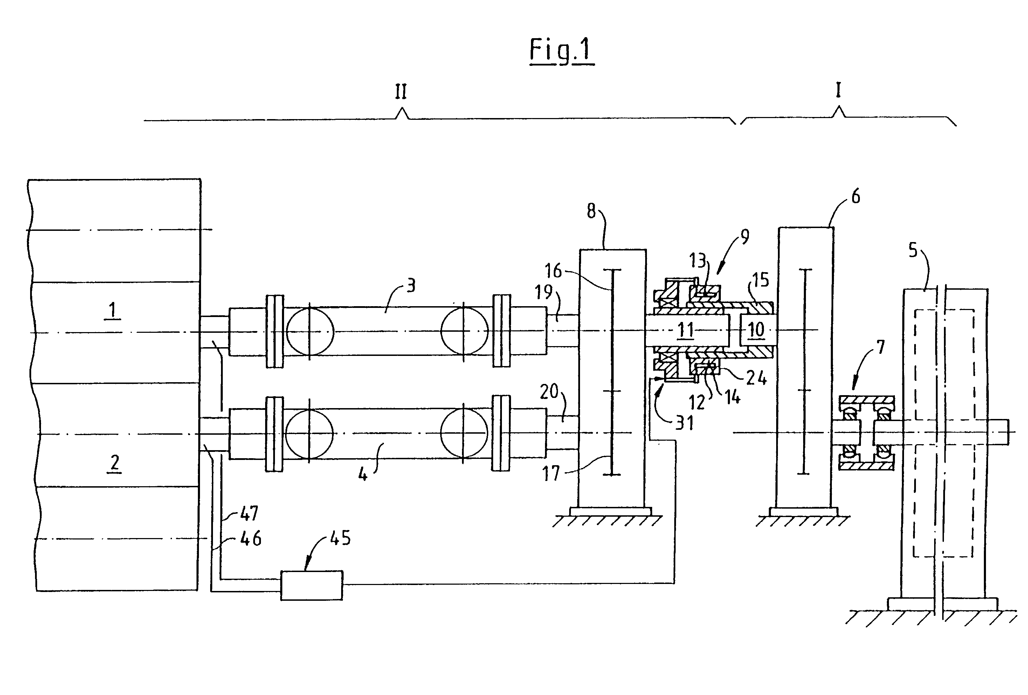

Die Figur 1 verdeutlicht die erfindungsgemäße Ausführung eines Antriebssystems mit wenigstens zwei Gelenkwellensträngen und mit integrierter Einrichtung zur Sicherung gegenüber Drehmomentenüberlastung am Beispiel für den Einsatz in einem Walzwerk. Eine Arbeitswalze 1 und eine Arbeitswalze 2 werden jeweils über einen Gelenkwellenstrang 3 bzw. einen Gelenkwellenstrang 4 angetrieben. Die von einer Antriebsmaschine 5, die beispielsweise als Elektromotor ausgeführt ist, aufgebrachte Leistung wird über entsprechende Drehzahl-Drehmomentenwandler auf die Gelenkwellenstränge 3 bzw. 4 übertragen. Dem Motor 5 ist ein Getriebe zur Untersetzung der Ausgangsdrehzahl des Motors 5 nachgeordnet. Die Verbindung des Motors 5 mit dem Untersetzungsgetriebe 6 erfolgt über eine drehstarre Kupplung 7, die beispielsweise in Form einer Zahnkupplung ausgebildet sein kann. Dem Untersetzungsgetriebe 6 ist ein Verteilergetriebe 8, das auch als Kammwalzgetriebe bezeichnet wird, nachgeschaltet. Das Verteilergetriebe 8 dient zur Aufteilung der Leistung auf die einzelnen Gelenkwellenstränge 3 bzw. 4. Zwischen dem Untersetzungsgetriebe 6 und dem Verteilergetriebe 8 ist eine Sicherheitskupplung 9 zwischengeschaltet. Die Sicherheitskupplung 9 dient neben der Drehmomentenübertragung zwischen Untersetzungsgetriebe und Verteilergetriebe zur Absicherung gegenüber Drehmomentenüberlastung. Die Sicherheitskupplung 9 umfaßt einen Kupplungsgrundkörper 24 und einen Entlastungsmechanismus 31. Der Kupplungsgrundkörper 24 umfaßt wenigstens eine dünnwandige Hülse 12, die eine sich axial erstreckende Wand 13 einer im wesentlichen ringförmigen Kammer 14 bildet. Die ringförmige Kammer 14 ist mit einem Druckmittel beaufschlagbar, um die Hülse in radialer Richtung zu deformieren. Die Realisierung der kraftschlüssigen Verbindung zwischen dem Untersetzungs- und dem Verteilergetriebe mittels der Sicherheitskupplung 9 kann verschiedenartig ausgeführt sein. Beispielsweise kann mit einer Ausgangswelle 10 des Untersetzungsgetriebes 6 ein Flansch 15 drehfest verbunden sein, der reibschlüssig mit einer Eingangswelle 11 des Verteilergetriebes 8 mittels dem Kupplungsgrundkörper 24 verbunden ist. Der Kupplungsgrundkörper 24 der Sicherheitskupplung 9 unterteilt damit den Antriebsstrang in zwei Teile - einen ersten Teil I, der mit der Antriebsquelle, dem Motor 5 verbunden ist, und einen zweiten Teil II, der mit der Abtriebsseite, im Ausführungsbeispiel mit den Arbeitswalzen 1 und 2 verbunden ist. Das Verteilergetriebe 8 ist im dargestellten Ausführungsbeispiel in Form einer einfachen Stirnradstufe ausgeführt. Diese umfaßt die Stirnräder 16 und 17. Stirnrad 16 ist dabei drehfest auf der Getriebeeingangswelle 11 des Verteilergetriebes 8 angeordnet, wobei die Getriebeeingangswelle 11 gleich einer ersten Ausgangswelle 19 des Verteilergetriebes 8 ist. Das Stirnrad 17 ist drehfest auf einer zweiten Getriebeausgangswelle 20 des Verteilergetriebes 8 angeordnet. Die Ausgangswellen 19 und 20 des Verteilergetriebes sind drehfest mit den Gelenkwellensträngen 3 und 4 verbunden.

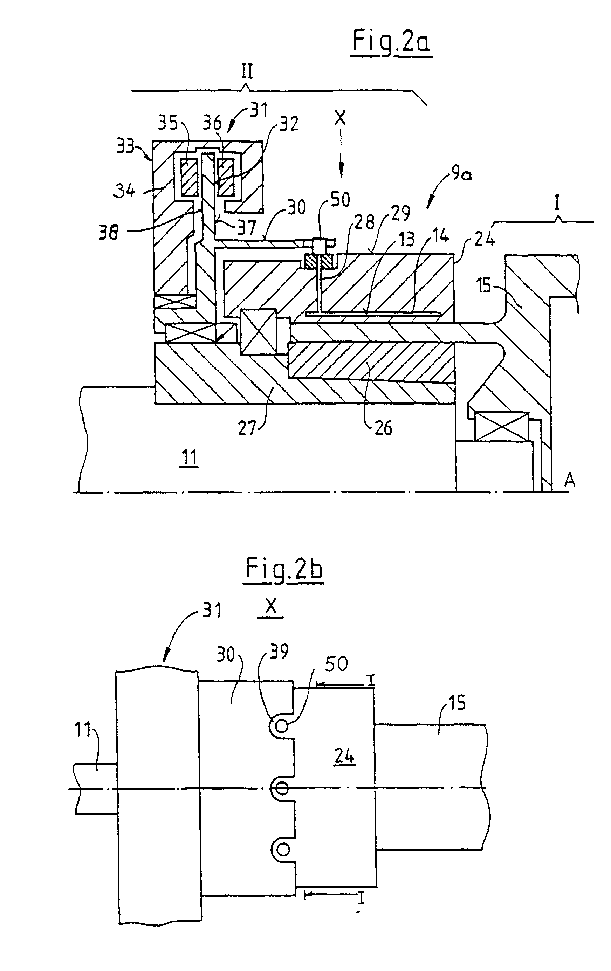

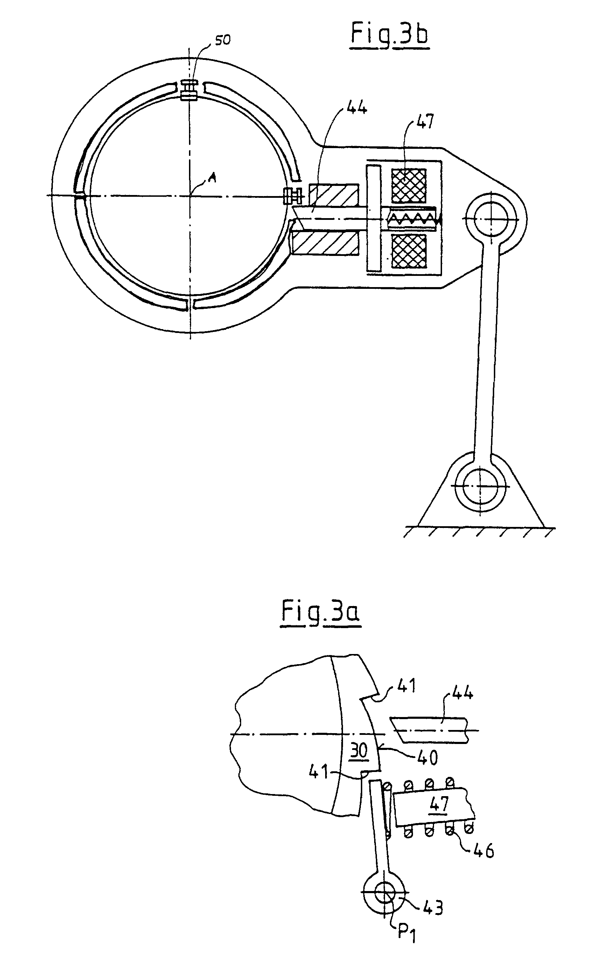

Der Entlastungsmechanismus 31 kann vielgestaltig ausgeführt sein, beispielsweise wie in den Figuren 2 und 3. Der Entlastungsmechanismus 31 dient der Herbeiführung einer Entspannung in der ringförmigen Kammer 14. Die Aktivierung des Entlastungsmechanismus 31 erfolgt über eine Kopplung 45 mit den Meß- bzw. Erfassungseinrichtungen, hier den Drehmomentmeßeinrichtungen 46 und 47, die den Gelenkwellensträngen 3 und 4 zugeordnet sind. Die Kopplung 45 kann beispielsweise als Steuerung ausgeführt sein. Die Drehmomentmeßeinrichtungen können verschiedenartig aufgebaut sein. Zur Messung des Drehmomentes können vorzugsweise Drehmomentenmeßsysteme, die nach dem Funktionsprinzip eines mechanischen Drehmomentenaufnehmers arbeiten, eingesetzt werden. Diese können beispielsweise wie in den Prospekten der Firma Ringspan ausgeführt sein. Sie arbeiten nach dem Grundprinzip, daß eine kleine Torsionsverformung in einer Axialbewegung durch einen Verstärkungshebel umgewandelt wird. Diese axiale Bewegung wird berührungsfrei durch einen Induktivdifferenzgeber in drehmomentproportionale Ströme umgewandelt. Diese drehmomentproportionalen Ströme können dann wieder beispielsweise als Eingangssignal einer Steuer- oder Regeleinrichtung fungieren, die diese Signale für ein Ausgangssignal zur Aktivierung der Abschereinrichtung verarbeitet.

Die Anordnung der Sicherheitskupplung gegenüber Drehmomentenüberlastung erfolgt in diesem Walzwerk zwischen dem Verteilergetriebe 8 und dem Untersetzungsgetriebe 6. Damit ist gewährleistet, daß die Sicherheitskupplung 9 unter den gegebenen Umständen möglichst nahe an den entsprechenden Störstellen angeordnet ist. Es besteht jedoch auch die Möglichkeit, hier im einzelnen jedoch nicht dargestellt, das Untersetzungsgetriebe 6 und das Verteilergetriebe 8 in einem Getriebegehäuse gemeinsam zu integrieren. Die Zahnkupplung 7 entfällt dann in diesem Fall und wird durch die Sicherheitskupplung 9 ersetzt. In einem derartigen Fall wird der Drehmomentenfluß direkt zwischen der Antriebsquelle, hier dem Motor 5, und dem Verteilergetriebe unterbrochen.

Die Figuren 2 verdeutlichen eine erfindungsgemäße Ausführung eines Entlastungsmechanismus für eine Sicherheitskupplung am Beispiel eines mittels einer Scheibenbremse betätigbaren bzw. abbremsbaren Abscherringes als Ausschnitt aus einem Antriebssystem entsprechend Figur 1, weshalb für gleiche Elemente die gleichen Bezugszeichen verwandt wurden. Die Sicherheitskupplung 9a verbindet den ersten Teil I eines Antriebssystems mit dem zweiten Teil II durch Verklemmung eines Flansches 15 des ersten Teiles des Antriebsstranges mit einer Buchse 26 und einer Buchse 27 sowie mit der Getriebeeingangswelle 11 des Verteilergetriebes 8 im zweiten Teil II. Der ringförmige Raum 14 wird zu diesem Zweck mit Druckmittel beaufschlagt. Dem ringförmigen Raum 14 sind Zufuhrleitungen 28, die sich im wesentlichen vom Außenumfang 29 des Kupplungsgrundkörpers 24 radial in Richtung der ringförmigen Kammer 14 erstrecken. Die Zufuhrleitungen 28 sind durch Verschlußelemente, hier sogenannte Abscherventile 50 luft- und flüssigkeitsdicht verschlossen. Die Abscherventile 50 ragen geringfügig über den Außenumfang 29 des Kupplungsgrundkörpers 24 hinaus. Der Kupplungsgrundkörper 24 ist drehbar auf einer Buchse 27 gelagert, die drehfest mit der Getriebeeingangswelle 11 des Verteilergetriebes 8 verbunden ist. Ebenfalls auf der Buchse 27 ist ein Abscherring 30 eines Entlastungsmechanismus 31 angeordnet. Der Abscherring 30 weist in radialer Richtung eine Verlängerung in Form eines Ringes 32 auf. Vorzugsweise ist eine Scheibenbremseinrichtung 33 ebenfalls frei drehbar gegenüber dem Abscherring 30 gelagert. Alle Elemente der Sicherheitskupplung 9a sind an die Achse A gebunden, d.h., daß keine externe Lagerung der Teile am Gestell erfolgt, was zur Vermeidung der Übertragung von Schwingungen auf das Gestell führt. Die Scheibenbremseinrichtung 33 umfaßt ein zentrales Gehäuse 34 mit zwei Scheiben 35 und 36, die an die Flächen 37 und 38 des Ringes 32 anpreßbar sind. Die Betätigung der Scheibenbremseinrichtung ist steuerbar. Der Abscherring 30 umfaßt Aussparungen 39, die die Abscherventile 50 zum Teil umschließen, wie in der Figur 2b in einer Ansicht X entsprechend Figur 2a dargestellt. Die Aussparungen 39 sind vorzugsweise randoffen ausgeführt. Bei Betätigung der Scheibenbremseinrichtung 33 werden die Scheiben 35 und 36 an die Flächen 37 und 38 des Ringes 32 angepreßt und die Geschwindigkeit bzw. Drehzahl des Abscherringes 30 wird bis zum Stillstand abgebremst. Dabei erfolgt eine Relativbewegung zwischen den Aussparungen 39 und den Abscherventilen 50, was zu einer Abscherung von letzteren führt. Dabei werden die Zufuhrleitungen 28 geöffnet, die Druckflüssigkeit im Druckraum 14 entspannt sich. Die reibschlüssige Verbindung zwischen dem ersten und dem zweiten Teil des Antriebsstranges wird aufgehoben, d.h. der Drehmomentenfluß wird unterbrochen.

Die Figuren 3a und 3b verdeutlichen eine Einrichtung zur Abbremsung bzw. zur Arretierung des Abscherringes entsprechend entsprechend Figur 1, weshalb für gleiche Elemente wiederum gleiche Bezugszeichen verwandt wurden. Der Abscherring 30 weist hier ebenfalls randoffene Aussparungen 39 auf, die die Abscherventile 50 zum Teil umschließen. Der Abscherring 30 ist in radialer Richtung ebenfalls verlängert ausgeführt. Er weist in radialer Richtung oder in axialer Richtung an seinem Außenumfang 40 Raster 41 auf, die beispielsweise in Form einer Sägezahnverzahnung ausgeführt sein können. Den Rastern zugeordnet ist wenigstens ein Sperr- bzw. Verriegelungselement, das beispielsweise in Form einer Klinke 43 oder eines Sperrbolzens 44 ausgebildet sein kann. Beide Möglichkeiten sind in der Fig. 3a angedeutet. Die Betätigung der Sperrbolzen 44 erfolgt dabei im wesentlichen senkrecht zur Achse A der Getriebeeingangswelle 11. Bei Verwendung einer Klinke 43 zur Abbremsung bzw. Arretierung des Abscherringes 30 erfolgt die Arretierung durch Drehen der Klinke um einen festen Drehpunkt P1. Die Klinke 43 ist zu diesem Zweck in radialer Richtung möglichst seitlich versetzt um den Drehpunkt P1 drehbar gelagert. Die Klinke 43 ist in ihrer Lage durch vorgespannte Federn 46 fixiert. Die Betätigung der Klinke, d.h. das Schwenken um den Punkt P1, erfolgt durch einen Magneten 47. Analog dazu kann die Betätigung des Sperrbolzens 44 ebenfalls durch einen Magneten 47 erfolgen.

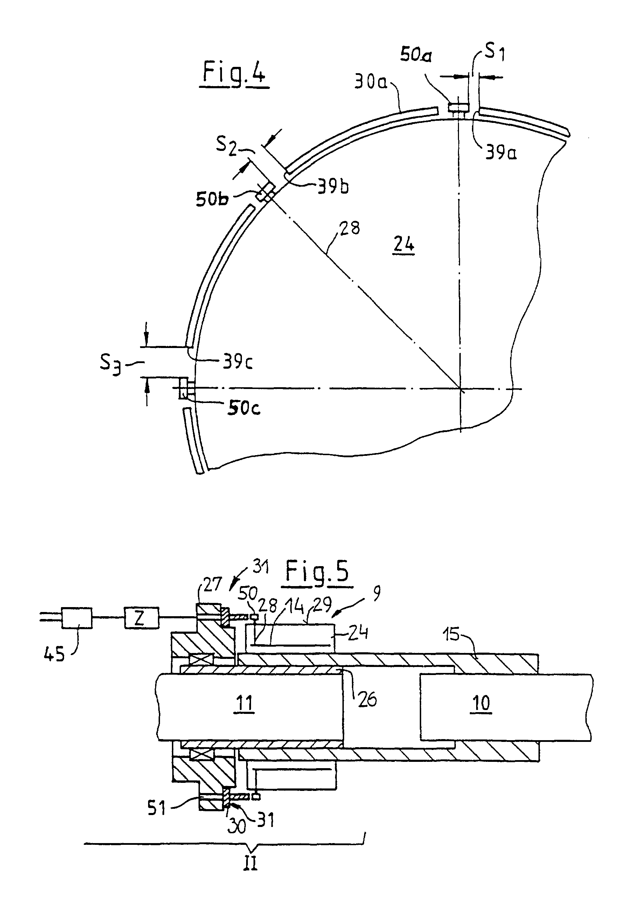

Die Figur 4 verdeutlicht eine bevorzugte Ausführung eines Abscherringes, beispielsweise für den Einsatz in den Entlastungseinrichtungen 31, die in den Figuren 2 und 3 näher erläutert sind. Der Abscherring und der Kupplungsgrundkörper, sind hier am Beispiel der in Figur 2b dargestellten Sicherheitskupplung ist in einer Ansicht I-I gemäß dieser Figur wiedergegeben. Der Kupplungsgrundkörper 24 umfaßt hier eine Vielzahl von hier nur strichpunktiert angedeuteten Zufuhrleitungen 28 zur ringförmigen Kammer 14. Diese sind durch Abscherventile 50, hier dargestellt die Ventile 50a, 50b, 50c, verschlossen. Der Abscherring 30a, der den Kupplungsgrundkörper 24 auf einem Teil seiner Ausdehnung in axialer Richtung umschließt, weist vorzugsweise randoffene Ausnehmungen 39 auf. Die Aussparungen 39, hier 39a bis 39c sind größenmäßig unterschiedlich ausgeführt, so daß in Drehrichtung die Abstände Sa bis Sc zwischen den Aussparungsrändern und den Angriffsflächen der Abscherventile 50a bis 50c immer größer werden. Dadurch wird erreicht, daß die Ventile 50 in Drehrichtung nacheinander abgeschert werden können ohne daß große Kräfte dafür aufgebracht werden müssen.

Die Figur 5 verdeutlicht eine erfindungsgemäße Ausführung eines Entlastungsmechanismus für eine Sicherheitskupplung am Beispiel eines mittels Sprengbolzen betätigbaren Abscherringes in einem Ausschnitt aus einem Antriebssystem beispielsweise entsprechend Figur 1, weshalb für gleiche Elemente die gleichen Bezugszeichen verwendet werden. Die Sicherheitskupplung 9 verbindet den ersten Teil I eines Antriebssystems mit dem zweiten Teil II durch Verklemmung eines Flansches 15 des ersten Teiles des Antriebsstranges mit einer Buchse 26 sowie mit der Getriebeeingangswelle 11 des Verteilergetriebes 8 im zweiten Teil II. Der ringförmige Raum 14 wird zu diesem Zweck mit Druckmittel beaufschlagt. Dem ringförmigen Raum 14 sind Zufuhrleitungen 28, die sich im wesentlichen vom Außenumfang 29 des Kupplungsgrundkörpers 24 radial in Richtung der ringförmigen Kammer 14 erstrecken, zugeordnet. Die Zufuhrleitungen 28 sind durch Abscherventile 50 luft- und flüssigkeitsdicht verschlossen. Die Abscherventile 50 ragen geringfügig über den Außenumfang 29 des Kupplungsgrundkörpers 24 hinaus. Auf der Buchse 26 ist ein den Abscherring 30 eines Entlastungsmechanismus 31 tragendes Element 27 angeordnet. Der Abscherring ist drehfest mit dem Element 27 verbunden, beispielsweise in Form einer Keilwellenverbindung 55. Er ist in axialer Richtung parallel zur Symmetrieachse der Antriebswelle gegenüber der Buchse 27 verschiebbar. Am Abscherring 30 greift wenigstens eine Trennschraube in Form eines Sprengbolzens 51 an. Bei der vorzugsweisen Verwendung mehrerer Sprengbolzen 51 sind diese vorzugsweise gleichmäßig auf vorzugsweise einem gleichen Durchmesser am Abscherring angeordnet. Die Sprengbolzen 51 sind mit einer Zündeinrichtung gekoppelt, welche wiederum mit dem Ausgang einer hier nicht dargestellten Steuereinrichtung, welche der Steuereinrichtung 45 in Figur 1 entsprechen kann, verbunden ist, an welchem ein Stellsignal zur Auslösung des Zündvorganges entsprechend den ermittelten Drehmomentenoder Störsignalen ausgegeben wird.

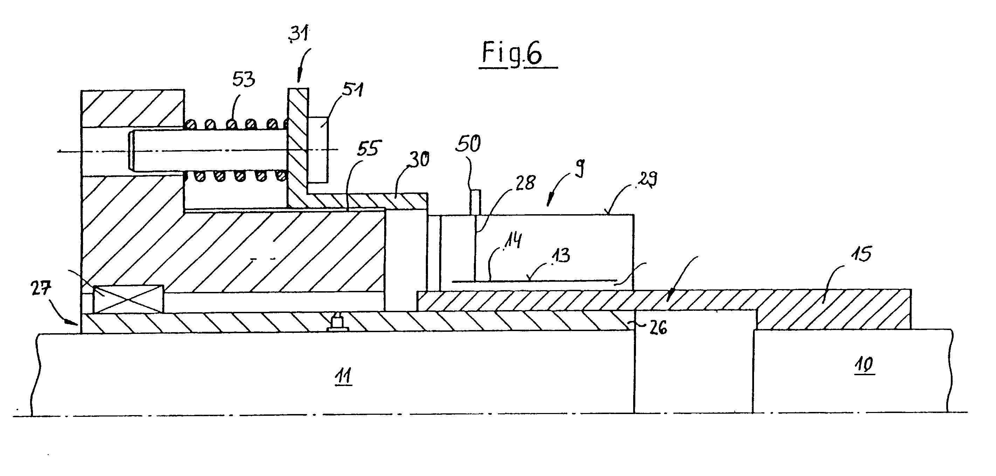

Die Figur 6 verdeutlicht eine weitere Ausführungsmöglichkeit mit einem, mittels Feder 53, vorgespannten Abscherring. Dieser wird im Normalbetrieb mittels der Trennschrauben 51 in seiner Lage gegenüber den Verschlußventilen 50 der Sicherheitskupplung fixiert. Im Überlastfall werden die Trennschrauben gezündet und damit wird der Abscherring im dargestellten Fall in axialer Richtung beschleunigt und schert die Ventilköpfe der Verschlußventile der Sicherheitskupplung ab.

Die Trennschrauben und sprengmitteltragenden Elemente sind in verschiedenen Ausführungen beispielsweise aus dem Firmenprospekten der Fa. Dynamit Nobel bekannt.

Für die Anordnung bzw. Zuordnung der Sprengbolzen zur Abschereinrichtung, welche vorzugsweise in Form eines Abscherringes ausgeführt ist, wobei jedoch auch andere Möglichkeiten denkbar sind, sind theoretisch viele Varianten denkbar. Allen ist jedoch gemeinsam, daß durch Zündung eine sofort bei Ermittlung der Drehmomentenspitze wirksam werdende Kraft am Ventil erzeugt wird, die ein Lösen des Verschlußelementes bzw. des Ventils und damit eine Unterbrechung der Drehmomentenübertragung mittels der hydraulisch verspannbaren Buchsen und Hülsen ermöglicht. Diese weiteren Varianten liegen im Ermessen des Fachmannes, weshalb auf weitere Ausführungsmöglichkeiten hier nicht näher eingangen werden soll.

## Patentansprüche

1. Antriebssystem zur Leistungsübertragung von einer Antriebsquelle (5) auf mehrere Abtriebssstränge (3, 4)
1.1 mit einem Verteilergetriebe (8), das den Abstriebssträngen (3, 4) vorgeschaltet ist;
1.2 mit einer Einrichtung zur Sicherung gegenüber Drehmomentenüberlastung an den Abtriebssträngen (3, 4);
1.3 die Einrichtung umfaßt eine Sicherheitskupplung (9) mit folgenden Merkmalen:
1.3.1 mit einem Kupplungskörper (24) zur reibschlüssigen Verbindung zweier Maschinenteile (I, II), umfassend wenigstens eine dünnwandige Hülse (12), die eine Wand (13) einer ringförmigen Kammer (14) bildet, welche mit Druckmittel beaufschlagbar ist;
1.3.2 mit wenigstens einer Zufuhrleitung (28), die sich durch den Kupplungskörper (24) bis zur ringförmigen Kammer (14) erstreckt und luft- und flüssigkeitsdicht mittels Verschlußelementen (50) verschließbar ist;
1.3.3 mit einem Entlastungsmechanismus (31), welcher im Überlastfall wenigstens mittelbar an den Verschlußelementen (50) zerstörerisch wirksam werden kann und damit eine Entspannung des Druckmittels in der ringförmigen kammer (14) bewirkt;
**gekennzeichnet durch** die folgenden Merkmale:
1.4 die Sicherheitskupplung (9) ist dem Verteilergetriebe (8) vorgeschaltet;
1.5 der Entlastungsmechanismus (31) ist jeweils mit einer Einrichtung zur Erfassung des Drehmomentes (46, 47) an den Abtriebssträngen (3, 4) und/oder einer dem Drehmoment proportionalen Größe, welche jedem Abtriebsstrang zugeordnet ist, und/oder einer Störgröße in der Umgebung der Maschine gekoppelt;
1.6 die Kopplung (45) umfaßt Mittel, welche bei Überschreitung des Drehmomentes und/oder einer dem Drehmoment proportionalen Größe und/oder einer Störgröße den Entlastungsmechanismus (31) aktiviert.

2. Antriebssystem nach Anspruch 1, **gekennzeichnet durch** folgende Merkmale:
2.1 die Kopplung (45) umfaßt eine Steuereinrichtung;
2.2 die Steuereinrichtung weist wenigstens einen Eingang auf, welche mit den Meß- bzw. Erfassungseinrichtungen (46, 47) der Abtriebsstränge (3, 4) und/oder der Umgebung verbunden sind;
2.3 die Steuereinrichtung weist wenigstens einen Ausgang zur Ausgabe eines Stellsignales für den Entlastungsmechanismus (31) auf.

3. Antriebssystem nach Anspruch 1, **gekennzeichnet durch** folgende Merkmale:
3.1 die Kopplung (45) umfaßt einen Wandler;
3.2 der Wandler ist mit den Meß- bzw. Erfassungseinrichtungen (46, 47) der Abtriebsstränge (3, 4) gekoppelt;
3.3 der Wandler wandelt die von den Meß- bzw. Erfassungseinrichtungen (46, 47) der Abtriebsstränge (3, 4) erhaltenen Signale in ein Stellsignal zur Auslösung des Entlastungsmechanismus (31) um.

4. Antriebssystem nach einem der Ansprüche 1 bis 3, **dadurch gekennzeichnet, daß** die dem Drehmoment proportionalen Größen Betriebsparameter des Abtriebsstranges sind (Walzkraft).

5. Antriebssystem nach einem der Ansprüche 1 bis 3, **dadurch gekennzeichnet, daß** die dem Drehmoment proportionalen Größen Betriebsparameter eines mittels der anzuschließenden Maschine zu beoder verarbeitenden Gutes sind.

6. Antriebssystem nach einem der Ansprüche 1 bis 5, **dadurch gekennzeichnet, daß** als Störgröße ein Wert für aktuell auftretende Schwingungen im Fundament ist.

7. Antriebssystem nach einem der Ansprüche 1 bis 6, **gekennzeichnet durch** die folgenden Merkmale:
7.1 der Entlastungsmechanismus (31) umfaßt eine Abschereinrichtung (30), welche an den Verschlußelementen (50) wirksam wird;
7.2 die Abschereinrichtung (30) ist frei drehbar gegenüber dem Kupplungsgrundkörper (24) gelagert.

8. Antriebssystem nach Anspruch 7, **gekennzeichnet durch** folgende Merkmale:
8.1 die Abschereinrichtung ist als Abscherring (30) ausgeführt;
8.2 der Abscherring (30) weist Aussparungen (39) auf, die die Verschlußelemente (50) wenigstens zum Teil umschließen.

9. Antriebssystem nach Anspruch 8, **dadurch gekennzeichnet, daß** die Aussparungen (39) in Umfangsrichtung unterschiedliche Breiten aufweisen.

10. Antriebssystem nach einem der Ansprüche 7 bis 9, **gekennzeichnet durch** das folgende Merkmal:
10.1 der Abschereinrichtung ist eine Abbremseinrichtung zugeordnet.

11. Antriebssystem nach einem der Ansprüche 7 bis 10, **gekennzeichnet durch** die folgenden Merkmale:
11.1 die Abbremseinrichtung ist als Scheibenbremseinrichtung (33) ausgeführt;
11.2 der Abscherring (30) weist in radialer Richtung eine ringförmige Verlängerung (32) auf, die zwei Angriffsflächen für die Scheibenbremseinrichtung (33) aufweist.

12. Antriebssystem nach einem der Ansprüche 1 bis 7, **gekennzeichnet durch** die folgenden Merkmale:
12.1 der Abscherring (30) weist in radialer Richtung eine ringförmige Verlängerung auf, an deren Umfang (40) randoffene Aussparungen (41) vorgesehen sind;
12.2 die Abbremseinrichtung umfaßt Mittel (43, 44), die bei Aktivierung des Entlastungsmechanismus (31) in die randoffenen Aussparungen (41) eingreifen.

13. Antriebssystem nach Anspruch 12, **gekennzeichnet durch** die folgenden Merkmale:
13.1 den Mitteln (43, 44) ist wenigstens ein vorgespanntes Federelement (46) zugeordnet, das diese in einer fest definierten Ausgangslage hält;
13.2 den Mitteln (43, 44) ist weiterhin ein Magnet (47) zugeordnet, der bei Aktivierung des Entlastungsmechanismus (31) eine Kraft erzeugt, die der Vorspannkraft entgegengerichtet ist.

14. Antriebssystem nach einem der Ansprüche 12 oder 13, **gekennzeichnet durch** das folgende Merkmal:
- das Mittel (43, 44) ist wenigstens ein Sperrbolzen (44), der im wesentlichen parallel zur Symmetrieachse des Kupplungsgrundkörpers (24) in die Aussparungen (41) eingeschoben wird.

15. Antriebssystem nach einem der Ansprüche 12 oder 13, **dadurch gekennzeichnet, daß** das Mittel (43, 44) eine um einen festen Drehpunkt schwenkbare Klinke (43) ist.

16. Antriebssystem nach einem der Ansprüche 1 bis 5; **gekennzeichnet durch** die folgenden Merkmale:
16.1 der Entlastungsmechanismus (31) umfaßt eine Abschereinrichtung, welche an den Verschlußelementen (50) wirksam wird;
16.2 der Entlastungsmechanismus (31) umfaßt wenigstens ein ein Sprengmittel tragendes Bauelement (51), welches wenigstens mittelbar an den Verschlußelementen (50) wirksam ist;
16.3 das Sprengmittel tragende Bauelement (51) ist jeweils mit einer Einrichtung (46, 47) zur Erfassung des Drehmomentes zu den Abtriebssträngen und/oder einer dem Drehmoment proportionalen Größe, welche jedem Abtriebsstrang (3, 4) zugeordnet ist, und/oder einer Störgröße gekoppelt;
16.4 die Kopplung (45) umfaßt Mittel, welche bei Überschreitung des Drehmomentes oder einer dem Drehmoment proportionalen Größe das Sprengmittel zünden.

17. Antriebssystem nach Anspruch 16, **dadurch gekennzeichnet, daß** die Abscherreinrichtung in Form eines Abscherringes (30) ausgeführt ist.

18. Antriebssystem nach einem der Ansprüche 16 oder 17, **gekennzeichnet durch** die folgenden Merkmale:
18.1 die Abschereinrichtung (30) ist mit der Antriebswelle drehfest verbunden jedoch gegenüber dieser in axialer Richtung verschiebbar gelagert;
18.2 das Sprengmittel tragende Bauelement ist als Trennschraube (51) ausgeführt, mittels der die Abschereinrichtung (30) gegenüber den Verschlußelementen (50) in axialer Richtung im Normalbetrieb in ihrer Lage fixiert ist.

19. Antriebsystem nach einem der Ansprüche 16 bis 18, **dadurch gekennzeichnet, daß** der Abscherring (30) im Normalbetrieb vorgespannt ist.

20. Antriebssystem nach einem der Ansprüche 1 bis 19, **dadurch gekennzeichnet, daß** die Kopplung (45) des Entlastungsmechanismus (31) mit den Meß- bzw. Erfassungseinrichtungen (46, 47) für die Drehmomente und/oder für die den Drehmomenten proportionalen Größen und/oder für die Störgröße elektronisch erfolgt.

## Claims

1. Drive system for power transmission from a drive source (5) to a plurality of output trains (3, 4)
1.1 with a power divider (8) connected upstream of the output trains (3, 4);
1.2 with a device for securing against torque overload on the output trains (3, 4);
1.3 the device comprises a safety coupling (9) with the following features;
1.3.1 with a coupling member (24) for frictional locking connection of two machine parts (I, II) comprising at least one thin wall sleeve (12) forming a wall (13) of an annular chamber (14) loadable by a pressure medium;
1.3.2 with at least one feed line (28) extending through the coupling member (24) up to the annular chamber (14) and being closable so as to be air- and liquid-tight by means of closure elements (50);
1.3.3 with a relief mechanism (31) which in the case of overload can at least indirectly have a disruptive effect on the closure elements (50) and therefore causes a relaxation of the pressure medium in the annular chamber (14);
**characterised by** the following features:
1.4 the safety coupling (9) is connected upstream of the power divider (8);
1.5 the relief mechanism (31) is coupled to a device for detecting the torque (46, 47) on the output trains (3, 4) and/or a variable proportional to the torque and associated with each output train and/or a disturbance variable in the vicinity of the machine;
1.6 the coupling (45) comprises means which activate the relief mechanism (31) when the torque and/or a variable proportional to the torque and/or a disturbance variable is exceeded.

2. Drive system according to claim 1, **characterised by** the following features:
2.1 the coupling (45) comprises a control device;
2.2 the control device has at least one input connected to the measuring or detecting devices (46, 47) of the output trains (3, 4) and/or the surroundings;
2.3 the control device has at least one output for emitting an actuating signal for the relief mechanism (31).

3. Drive system according to claim 1, **characterised by** the following features:
3.1 the coupling (45) comprises a transducer;
3.2 the transducer is coupled to the measuring or detecting devices (46, 47) of the output trains (3, 4);
3.3 the transducer converts the signals received from the measuring or detecting devices (46, 47) of the output trains (3, 4) into an actuating signal to trigger the relief mechanism (31).

4. Drive system according to any of claims 1 to 3, **characterised in that** the variables proportional to the torque are operating parameters of the output train (rolling load).

5. Drive system according to any of claims 1 to 3, **characterised in that** the variables proportional to the torque are operating parameters of an article to be machined or processed by means of the machine to be connected.

6. Drive system according to any of claims 1 to 5, **characterised in that** a value for vibrations actually occurring in the base is the disturbance variable.

7. Drive system according to any of claims 1 to 6, **characterised by** the following features:
7.1 the relief mechanism (31) comprises a shear device (30) which acts on the closure elements (50);
7.2 the shear device (30) is mounted so as to be freely rotatable with respect to the coupling basic member (24).

8. Drive system according to claim 7, **characterised by** the following features:
8.1 the shear device is designed as a shear ring (30);
8.2 the shear ring (30) has recesses (39) at least partially surrounding the closure elements (50).

9. Drive system according to claim 8, **characterised in that** the recesses (39) have different widths in the peripheral direction.

10. Drive system according to any of claims 7 to 9, **characterised by** the following feature:
10.1 a braking device is associated with the shear device.

11. Drive system according to any of claims 7 to 10, **characterised by** the following features:
11.1 the braking device is designed as a disc brake device (33);
11.2 the shear ring (30) has an annular extension (32) in the radial direction comprising two working faces for the disc brake device (33).

12. Drive system according to any of claims 1 to 7, **characterised by** the following features:
12.1 the shear ring (30) has an annular extension in the radial direction on the periphery (40) of which recesses (41) open at the edge are provided;
12.2 the braking device comprises means (43, 44) which engage in the recesses (41) open at the edge when the relief mechanism (31) is activated.

13. Drive system according to claim 12, **characterised by** the following features:
13.1 a biased spring element (46) is associated with the means (43, 44) and holds the latter in a strictly defined starting position;
13.2 a magnet (47) is also associated with the means (43, 44) and produces a force acting in the opposite direction to the bias force when the relief mechanism (31) is activated.

14. Drive system according to either of claims 12 or 13, **characterised by** the following feature:
- the means (43, 44) is at least one locking pin (44) inserted into the recesses (41) substantially parallel to the axis of symmetry of the coupling basic member (24).

15. Drive system according to either of claims 12 or 13, **characterised in that** the means (43, 44) is a pawl (43) pivotal about a fixed pivot point.

16. Drive system according to any of claims 1 to 5, **characterised by** the following features:
16.1 the relief mechanism (31) comprises a shear device which acts on the closure elements (50);
16.2 the relief mechanism (31) comprises at least one component (51) carrying a blasting agent and acting at least indirectly on the closure elements (50);
16.3 the component (51) carrying the blasting agent is coupled to a respective device (46, 47) for detecting the torque to the output trains and/or a variable proportional to the torque associated with each power train (3, 4) and/or a disturbance variable;
16.4 the coupling (45) comprises means which detonate the blasting agent when the torque or a variable proportional to the torque is exceeded.

17. Drive system according to claim 16, **characterised in that** the shear device is designed in the form of a shear ring (30).

18. Drive system according to any of claims 16 or 17, **characterised by** the following features:
18.1 the shear device (30) is non-rotatably connected to the drive shaft but displaceably mounted with respect thereto in the axial direction;
18.2 the component carrying the blasting agent is designed as a separating bolt (51) by means of which during normal operation the shear device (30) is fixed in its position in the axial direction with respect to the closure elements (50).

19. Drive system according to any of claims 16 to 18, **characterised in that** the shear ring (30) is biased during normal operation.

20. Drive system according to any of claims 1 to 19, **characterised in that** the coupling (45) of the relief mechanism (31) to the measuring or detecting devices (46, 47) for the torques and/or for the variables proportional to the torques and/for the disturbance variable is made electronically.

## Revendications

1. Système d'entraînement pour la transmission de puissance d'une source motrice (5) vers plusieurs lignes de transmission (3, 4) comprenant :
- un distributeur (8) en amont des lignes de transmission entraînées (3, 4),
- une installation de protection contre une surcharge de couple des lignes de transmission entraînées (3, 4),
- l'installation comprenant un embrayage de sécurité (9) ayant les caractéristiques suivantes
* un corps d'embrayage (24) pour une liaison par frottement de deux parties de machine (I, II) comprenant au moins un manchon à parois minces (12) qui forment une paroi (13) d'une chambre annulaire (14) recevant un agent sous pression,
* au moins une conduite d'alimentation (28) qui traverse le corps d'embrayage (24) jusqu'à la chambre annulaire (14) et est fermée de manière étanche à l'air et aux liquides par des éléments d'obturation (50),
* un mécanisme de décharge (31) qui en cas de surcharge agit par destruction au moins indirectement sur les éléments d'obturation (50) et peut ainsi produire la détente de l'agent de pression dans la chambre annulaire (14),
**caractérisé en ce que**
- l'embrayage de sécurité (9) est monté en amont du distributeur (8),
- le mécanisme de décharge (31) est couplé chaque fois à une installation pour détecter le couple (46, 47) des lignes de transmission entraînées (3, 4) et/ou une grandeur proportionnelle au couple associée à chaque ligne de transmission entraînée et/ou une grandeur perturbatrice dans l'environnement de la machine,
- l'embrayage (45) comprend des moyens qui activent le mécanisme de décharge (31) en cas de dépassement du couple et/ou d'une grandeur proportionnelle au couple et/ou d'une grandeur perturbatrice.

2. Système d'entraînement selon la revendication 1,
**caractérisé en ce que**
- l'embrayage (45) comprend une installation de commande,
- l'installation de commande comporte au moins une entrée reliée aux installations de mesure et de détection (46, 47) des lignes de transmission de sortie (3, 4) et/ou de l'environnement,
- l'installation de commande comporte au moins une sortie pour émettre un signal d'actionnement pour le mécanisme de décharge (31).

3. Système d'entraînement selon la revendication 1,
**caractérisé en ce que**
- l'embrayage (45) comporte un convertisseur,
- le convertisseur est couplé aux installations de mesure et de détection (46, 47) des lignes de transmission entraînées (3, 4),
- le convertisseur transforme les signaux fournis par les installations de mesure et de détection (46, 47) des lignes de transmission entraînées (3,4) en un signal d'actionnement pour déclencher le mécanisme de décharge (31).

4. Système d'entraînement selon l'une des revendications 1 à 3,
**caractérisé en ce que**
les grandeurs proportionnelles au couple sont des paramètres de fonctionnement de la ligne de transmission de sortie (force de laminage).

5. Système d'entraînement selon l'une des revendications 1 à 3,
**caractérisé en ce que**
les grandeurs proportionnelles au couple sont des paramètres de fonctionnement d'un produit à travailler avec la machine entraînée.

6. Système d'entraînement selon l'une des revendications 1 à 5,
**caractérisé en ce que**
la grandeur perturbatrice est une valeur des oscillations produites actuellement dans les fondations.

7. Système d'entraînement selon l'une des revendications 1 à 6,
**caractérisé en ce que**
- le mécanisme de décharge (31) comprend une installation de cisaillement (30) qui agit sur les éléments d'obturation (50),
- l'installation de cisaillement (30) peut tourner librement par rapport au corps de base (24) de l'embrayage .

8. Système d'entraînement selon la revendication 7,
**caractérisé en ce que**
- l'installation de cisaillement est constituée par un anneau de cisaillement (30),
- l'anneau de cisaillement (30) comporte des découpes (39) qui entourent au moins en partie les éléments d'obturation (50).

9. Système d'entraînement selon la revendication 8,
**caractérisé en ce que**
les découpes (39) ont des largeurs différentes dans la direction périphérique.

10. Système d'entraînement selon l'une des revendications 7 à 9,
**caractérisé en ce que**
l'installation de cisaillement est associée à une installation de freinage.

11. Système d'entraînement selon l'une des revendications 7 à 10,
**caractérisé en ce que**
- l'installation de freinage est réalisée sous la forme d'une installation de frein à disque (33),
- l'anneau de cisaillement (30) comporte dans la direction radiale, un prolongement annulaire (32) ayant deux surfaces d'attaque pour l'installation de frein à disque (33).

12. Système d'entraînement selon l'une des revendications 1 à 7,
**caractérisé en ce que**
- l'anneau de cisaillement (30) présente dans la direction radiale, un prolongement annulaire dont la périphérie (40) comporte des découpes (41) ouvertes vers le bord,
- l'installation de freinage comprend des moyens (43, 44) qui lorsque le mécanisme de décharge (31) est activé, pénètre dans les découpes à bords ouverts (41).

13. Système d'entraînement selon la revendication 12,
**caractérisé en ce que**
- les moyens (43, 44) sont associés à au moins un élément de ressort précontraint (46) qui maintient celui-ci dans une position de sortie, déterminée,
- les moyens (43, 44) comportent en outre un aimant (47) qui, activé, fait que le mécanisme de décharge (31) crée une force opposée à la force de précontrainte.

14. Système d'entrainement selon l'une des revendications 12 ou 13,
**caractérisé en ce que**
le moyen (43, 44) est au moins un goujon de blocage (44) essentiellement parallèle à l'axe de symétrie du corps de base (24) de l'embrayage glissé dans les cavités (41).

15. Système d'entraînement selon l'une des revendications 12 ou 13,
**caractérisé en ce que**
les moyens (43, 44) sont constitués par un verrou (43) pivotant autour d'un point de rotation fixe.

16. Système d'entraînement selon l'une des revendications 1 à 5,
**caractérisé en ce que**
- le mécanisme de décharge (31) comprend une installation de cisaillement agissant sur les éléments d'obturation (50),
- le mécanisme de décharge (31) comprend au moins un composant (51) portant un agent explosif qui agit au moins directement sur les éléments de fermeture (50),
- le composant (51) portant l'agent explosif est couplé chaque fois à une installation (46, 47) pour détecter le couple des lignes de transmission entraînées et/ou une grandeur proportionnelle au couple associée à chaque ligne de transmission entraînée (3, 4) et/ou une grandeur perturbatrice,
- l'embrayage (45) comprend des moyens qui en cas de dépassement du couple ou d'une grandeur proportionnelle au couple déclenche le moyen explosif.

17. Système d'entraînement selon la revendication 16,
**caractérisé en ce que**
l'installation de cisaillement est réalisée sous la forme d'un anneau de cisaillement (30).

18. Système d'entraînement selon l'une des revendications 16 ou 17,
**caractérisé en ce que**
- l'installation de cisaillement (30) est reliée solidairement en rotation à l'arbre moteur tout en pouvant coulisser axialement par rapport à celui-ci,
- le composant portant l'agent explosif est réalisé sous la forme d'une vis de séparation (51) à l'aide de laquelle l'installation de cisaillement (30) est bloquée dans sa position en fonctionnement normal dans la direction axiale par rapport aux éléments de fermeture (50).

19. Système d'entraînement selon l'une des revendications 16 à 18,
**caractérisé en ce que**
l'anneau de cisaillement (30) est précontraint en fonctionnement normal.

20. Système d'entraînement selon l'une des revendications 1 à 19,
**caractérisé en ce que**
l'embrayage (45) du mécanisme de décharge (31) se fait de manière électronique avec les installations de mesure et de saisie (46, 47) de couples et/ou de grandeurs proportionnelles au couple et/ou de grandeurs perturbatrices.
